Europäisches Patentamt

(19) European Patent Office

Office européen des brevets

(11) Publication number:

**0 060 708**
**B1**

(12) **EUROPEAN PATENT SPECIFICATION**

(45) Date of publication of patent specification: **16.04.86**

(21) Application number: **82301306.5**

(22) Date of filing: **15.03.82**

(51) Int. Cl.⁴: **F 16 D 63/00, F 16 H 35/00**

(54) **A gear train.**

(30) Priority: **13.03.81 AU 7987/81**

(43) Date of publication of application:
**22.09.82 Bulletin 82/38**

(45) Publication of the grant of the patent:
**16.04.86 Bulletin 86/16**

(84) Designated Contracting States:
**DE FR GB**

(56) References cited:
**DE-C- 523 311**
**US-A-4 080 847**

(73) Proprietor: **Cope, Roy Godfrey**
**35, Hume Highway**
**Greenacre New South Wales 2190 (AU)**

(72) Inventor: **Cope, Roy Godfrey**
**35, Hume Highway**
**Greenacre New South Wales 2190 (AU)**

(74) Representative: **Walter, Douglas Ernest et al**
**HASELTINE LAKE & CO. 28, Southampton**
**Buildings**
**London WC2A 1AT (GB)**

Courier Press, Leamington Spa, England.

## Description

The present invention relates to the transmission of rotary power via gear trains and also to braking systems that employ gears.

Conventional gears have not been employed to apply a negative torque to a power transmitting shaft in order to act as brake on the shaft. Additionally most braking systems require the dissipation of heat to release the energy absorbed by the braking system. Thus, it is a disadvantage of known braking systems that their efficiency depends upon the ability to dissipate heat.

DE—C—523311 discloses a gear train consisting of a sun gear with a plurality of planetary gears meshingly engaged therewith and rotatable about the longitudinal axis of the planetary gear. These planetary gears include two sets of gears with one set of the gears being fixed for rotation about a common axis and the other set of gears rotatable about a further axis but rotatable independently of each other. However this gear train does not relate to a system as mentioned above.

It is an object of the present invention to overcome or substantially ameliorate the above disadvantages.

There is disclosed herein as defined in claim 1 a gear train comprising a first and second gear mounted for independent rotation about a first axis, a third and fourth gear coupled so as to rotate together about a second axis generally parallel to the first axis, said third gear being meshingly engaged with said first gear and said fourth gear being meshingly engaged with said second gear, a fifth and sixth gear coupled so as to rotate together about a third axis, also generally parallel to said first axis, said fifth gear being meshingly engaged with said first gear and said sixth gear being meshingly engaged with said second gear, and wherein said third and fourth gears are mounted so as to be movable angularly at a fixed radius about said third axis.

A preferred form of the present invention will now be described by way of example with reference to the accompanying drawings, wherein:

Figure 1 is a schematic front elevation depicting a gear train adapted to be used as a brake; and

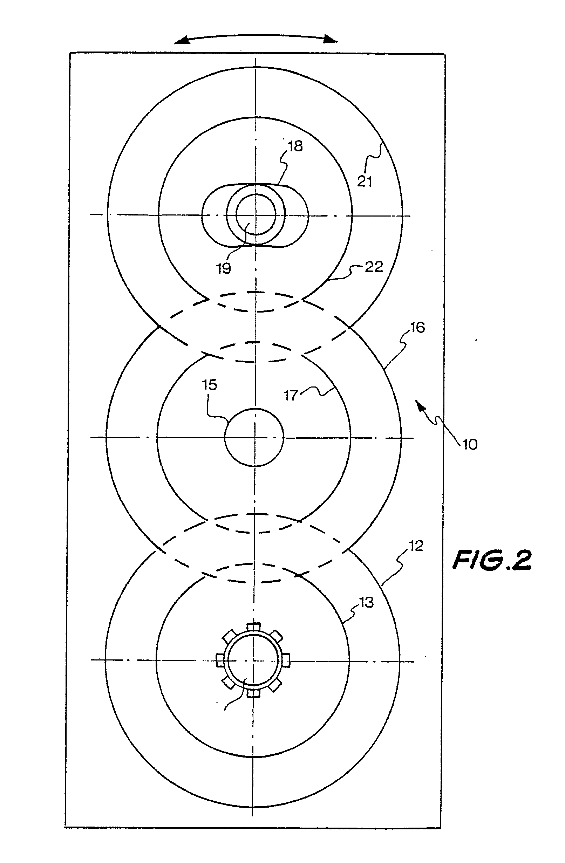

Figure 2 is a schematic side elevation of the gear train of Figure 1.

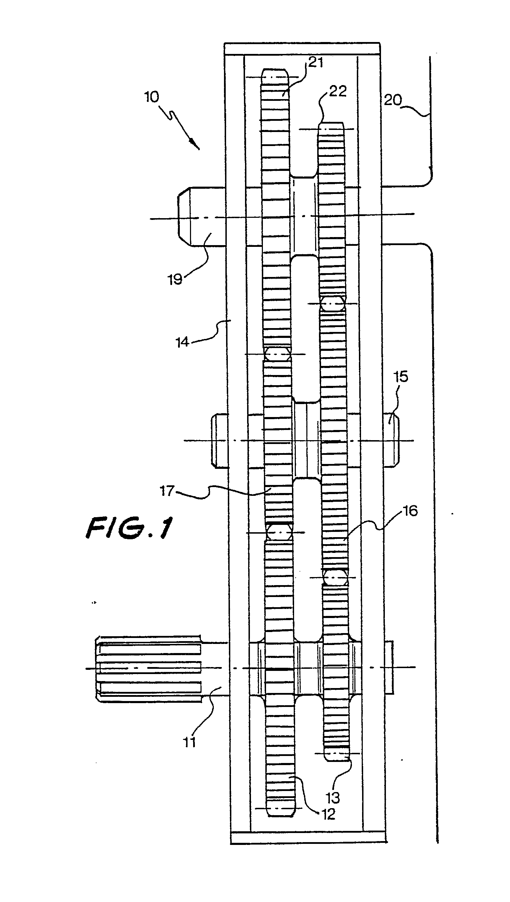

In Figure 1 there is schematically depicted a gear train 10 including a rotary power input shaft 11 to which there is to be applied a braking force. The gear train 10 includes a first pair of gears 12 and 13 which are fixed to the shaft 11 so as to rotate therewith. The shaft 11 is rotatably supported within a frame or casing 14 so as to be rotatable about its longitudinal axis. Also supported by the casing 14 is a further shaft 15 which rotatably supports a pair of gears 16 and 17 which are independently rotatable about the longitudinal axis of the shaft 15. The casing 14 is provided with a slot 18 which extends angularly at a fixed radius about the longitudinal axis of the shaft 11. The slot 18 receives a fixed shaft 19 which would be attached to a rigid frame 20. The shaft 19 rotatably supports a pair of gears 21 and 22 which are fixed to each other so as to rotate as a pair.

As an example, the gears 12, 16 and 21 could be provided with 19 teeth, while the gears 13, 17 and 22 could be provided with 15 teeth. Accordingly with the gears meshingly engaged as illustrated and with the casing 14 at a predetermined position, the gear train 10 would be rotated by the shaft 11 without any braking force being applied to the shaft 11. However upon the casing being moved about the longitudinal axis of the shaft 11 a negative torque will be applied to the shaft 11. More particularly as the casing 14 is caused to rotate about the axis of the shaft 11, the gears 21 and 22 move angularly about the axis of the shaft 15 until the tolerance between the gears is taken up. Thereafter, any further force applied to the casing 14 will cause a negative torque to be applied to the shaft 11 via the gears 12 and 13. The above negative torque results from the rotation of the gears 21 and 22 about the axis of the shaft 11 so as to bias the gear train 10 to a position wherein it acts as a rigid member as opposed to rotatable gears.

In an application of the above discussed gear train 10, the shaft 11 may extend to a wheel of a motor vehicle. Accordingly the input torque to the gear train 10 via the shaft 11 will determine the negative torque applied to the shaft to thereby apply a braking force to the motor vehicle wheel. Under conditions where the load which may be applied to the shaft 11 varies, the negative torque applied to the shaft would vary accordingly. Thus, any loss of coefficient of friction between the wheel and the road surface will cause a corresponding drop in braking output by the gear train 10 as the force being applied to the casing 14 is dependent on the torque being applied to shaft 11.

It should be appreciated that the above gear train 10 will function providing the number of teeth on the gears ensures that the angular velocity of gears 12 and 13 would remain the same. However the gear train 10 will operate as a braking system when the number of teeth on gears 12 and 17 is different to gears 21 and 17.

## Claims

1. A gear train (10) comprising a first (16) and second (17) gear mounted for independent rotation about a first axis (15), a third (22) and fourth (21) gear coupled so as to rotate together about a second axis (19) generally parallel to the first axis (15), said third gear (22) being meshingly engaged with said first gear (16) and said fourth gear (21) being meshingly engaged with said second gear (17), a fifth (13) and sixth (12) gear coupled so as to rotate together about a third axis (11), also generally parallel to said first axis, said fifth gear (13) being meshingly engaged with said first gear (16) and said sixth (12) gear being meshingly engaged with said second gear (17), and

wherein said third (22) and fourth (21) gears are mounted so as to be movable angularly at a fixed radius about said third axis (11).

2. The gear train (10) of claim 1, wherein said first, second, third and fourth gears are movable about said third axis, said fifth (13) and sixth (12) gears are mounted on an input shaft (11), said gear train (10) further includes a casing (14) within which said input shaft (11) is rotatably mounted, said first (16) and second (17) gears are mounted on a common shaft (15) also mounted in said casing (14), and said third (22) and fourth (21) gears are also mounted on a common shaft (19) mounted in said casing (14).

3. The gear train (10) of claim 2, wherein said casing (14) is provided with a slot (18) around the shaft (19) supporting said third (22) and fourth (21) gears, so that the shaft (19) supporting said third (22) and fourth (21) gears may move relative to said casing (14) along an arcuate path at a substantially constant radius about said third axis (11).

4. The gear train (10) of claim 3, wherein the shaft (19) supporting said third (22) and fourth (21) gears is fixed to a stationary frame (20).

5. The gear train (10) of any one of claims 1 to 4, wherein said first (16), fourth (21) and sixth (12) gears have the same number of teeth which is different to the number of teeth of said second (17), third (22) and fifth gears (13), and wherein said second (17), third (22) and fifth gears (13) have the same number of teeth.

6. The gear train (10) of any one of claims 1 to 4, wherein said first (16) and third gears (22) have a different number of teeth.

## Patentansprüche

1. Getriebe (10), welches ein erstes (16) und ein zweites (17) Zahnrad, welche zur unabhängigen Rotation um eine erste Achse (15) angeordnet sind, ein drittes (22) und ein viertes (21) Zahnrad, welche derart gekoppelt sind, daß sie zusammen um eine zweite Achse (19) rotieren, welche generell parallel zu der ersten Achse (15) verläuft, wobei das dritte Zahnrad (22) in Eingriff mit dem ersten Zahnrad (16) und das vierte Zahnrad (21) in Eingriff mit dem zweiten Zahnrad (17) steht, sowie ein fünftes (13) und ein sechstes (12) Zahnrad umfaßt, welche so gekoppelt sind, daß sie zusammen um eine dritte Achse (11) rotieren, welche ebenfalls generell parallel zur ersten Achse verläuft, wobei das dritte Zahnrad (13) in Eingriff mit dem ersten Zahnrad (16) und das sechste (12) Zahnrad mit dem zweiten Zahnrad (17) in Eingriff steht, und wobei das dritte (22) und das vierte (21) Zahnrad derart angeordnet sind, daß sie mit einen festen Radius um die dritte Achse (11) winkelbeweglich sind.

2. Getriebe (10) nach Anspruch 1, wobei das erste, zweite, dritte und vierte Zahnrad um die dritte Achse bewegbar sind, das fünfte (13) und das sechste (12) Zahnrad an der Antriebswelle (11) angeordnet sind, das Getriebe (10) weiterhin ein Gehäuse (14) umfaßt, in welchem die Antriebswelle (11) drehbar gelagert ist, das erste (16) und das zweite (17) Zahnrad auf einer gemeinsamen Welle (15) angeordnet sind welche gleichfalls in dem Gehäuse (14) gelagert ist und das dritte (22) und das vierte (21) Zahnrad gleichfalls auf einer gemeinsamen Welle (19) angeordnet sind, welche in dem Gehäuse (14) gelagert ist.

3. Getriebe (10) nach Anspruch 2, wobei das Gehäuse (14) mit einem Schlitz (18) um die Welle (19) versehen ist, welche das dritte (22) und das vierte (21) Zahnrad trägt, so daß die Welle (19), welche das dritte (22) und das vierte (21) Zahnrad trägt, sich gegenüber dem Gehäuse (14) entlang eines bogenförmigen Weges von im wesentlichen konstanten Radius um die dritte Achse (11) bewegen kann.

4. Getriebe (10) nach Anspruch 3, wobei die Welle (19), welche das dritte (22) und das vierte (21) Zahnrad trägt in einem stationären Rahmen (20) befestigt ist.

5. Getriebe (10) nach einem der Ansprüche 1 bis 4, wobei das erste (16), das vierte (21) und das sechste (12) Zahnrad die gleiche Anzahl von Zähnen aufweisen, welche sich von der Anzahl der Zähne des zweiten (17), dritten (22) und fünften Zahnrades (13) unterscheidet, und wobei das zweite (17), das dritte (22) und das fünfte (13) Zahnrad die gleiche Anzahl von Zähnen aufweisen.

6. Getriebe (10) nach einem der Ansprüche 1 bis 4, wobei das erste (16) und das dritte (22) Zahnrad eine unterschiedliche Anzahl von Zähnen aufweisen.

## Revendications

1. Un train d'engrenage (10) comprenant un premier (16) et un second (17) engrenage monté en vue d'une rotation indépendante autour d'un premier axe (15), un troisième (22) et un quatrième (21) engrenage couplé afin de tourner ensemble autour d'un second axe (19) généralement parallèle au premier axe (15), ledit troisième engrenage (22) étant en prise avec ledit premier engrenage (16) et ledit quatrième engrenage (21) étant en prise avec ledit second engrenage (17), un cinquième (13) et un sixième (12) engrenage couplé afin de tourner ensemble autour d'un troisième axe (11), également généralement parallèle audit premier axe, ledit cinquième engrenage (13) étant en prise avec ledit premier engrenage (16) et ledit sixième (12) engrenage étant en prise avec ledit second engrenage (17) et dans lequel lesdits troisième (22) et quatrième (21) engrenages sont montés afin de pouvoir se déplacer angulairement selon un rayon fixe autour dudit troisième axe (11).

2. Le train d'engrenage (10) de la revendication 1, dans lequel lesdits premier, second, troisième et quatrième engrenages peuvent se déplacer autour dudit troisième axe, lesdits cinquième (13) et sixième (12) engrenages sont montés sur un arbre d'entrée (11), ledit train d'engrenage (10) comprend en outre un boîtier (14) à l'intérieur duquel ledit arbre d'entrée (11) est monté pour pouvoir tourner, lesdits premier (16) et second (17) engrenages sont montés sur un arbre commun (15) également monté dans ledit boîtier (14), et lesdits troisième (22) et quatrième (21) engrenages sont également montés sur un arbre commun (19) monté dans ledit boîtier (14).

3. Le train d'engrenage (10) de la revendication 2, dans lequel ledit boîtier (14) présente une fente (18) autour de l'arbre (19) supportant lesdits troisième (22) et quatrième (21) engrenages, de sorte que l'arbre (19) supportant lesdits troisième (22) et quatrième (21) engrenages peut se déplacer par rapport audit boîtier (14) le long d'un trajet courbe selon un rayon sensiblement constant autour dudit troisième axe (11).

4. Le train d'engrenage (10) de la revendication 3, dans lequel l'arbre (19) supportant lesdits troisième (22) et quatrième (21) engrenages est fixé à un châssis fixe (20).

5. Le train d'engrenage (10) de l'une quelconque des revendications 1 à 4, dans lequel lesdits premier (16), quatrième (21) et sixième (12) engrenages présentent le même nombre de dents qui est différent du nombre de dents desdits second (17), troisième (22) et cinquième engrenage (13), et dans lequel lesdits second (17), troisième (22) et cinquième engrenages (13) présentent le même nombre de dents.

6. Le train d'engrenage (10) de l'une quelconque des revendications 1 à 4, dans lequel lesdits premier (16) et troisième engrenages (22) présentent un nombre différent de dents.

FIG.1

0 060 708

FIG.2